# EUROPEAN PATENT APPLICATION

(11) **EP 2 253 865 A2**
(43) Date of publication of application: **24.11.2010**
(21) Application number: 10161112.7
(22) Date of filing: 27.04.2010
(51) Int. Cl.: F16F 15/26

(54) **Balancer-shaft-supporting bearing unit**

(30) Priority: 19.05.2009 JP 2009120971
(71) Applicant: JTEKT Corporation, Osaka-shi Osaka 542-8502 (JP)
(72) Inventor: Waseda, Yoshitaka, Osaka-shi, Osaka 542-8502 (JP)
(74) Representative: TBK-Patent

(57) **Abstract**

A balancer-shaft-supporting bearing unit is structured in such a manner that a balancer shaft (30), on which a driven gear (35) that meshes with a driving gear (11) provided on a crankshaft (10) of an internal combustion engine is provided, is rotatably supported by a shaft-supporting portion (21) of a housing (20) via a roller bearing(40). Between the balancer shaft (30) and the housing (20), a load-receiving portion (50) that has a receiving face (51) that receives the balancer shaft (30) when the balancer shaft (30) is elastically deflected by an impact load applied to the driven gear (35) is formed at at least one of positions that are close to respective axial end portions of the driven gear (35).

## Description

### BACKGROUND OF THE INVENTION

### 1. Field of the Invention

The invention relates to a balancer-shaft-supporting bearing unit.

### 2. Description of the Related Art

There is a structure that is formed in order to offset vibration generated by rotation of an internal combustion engine. In this structure, a balancer shaft is supported by shaft-supporting portions of a housing via roller bearings in such a manner that the balancer shaft is rotated in synchronization with a crankshaft.
Also, there is a known structure that is formed in order to rotate a balancer shaft in synchronization with a crankshaft. In this structure, a driving gear is provided on the crankshaft and a driven gear that meshes with the driving gear is provided on the balancer shaft.
For example, Japanese Patent Application Publication No. 9-151993 (JP-A-9-151993) describes a balancer-shaft-supporting bearing unit that is structured in such a manner that a driving gear is provided on a crankshaft and a driven gear that meshes with the driving gear is provided on a balancer shaft.

For example, when a vehicle is started suddenly, the vehicle is accelerated suddenly, or gears are changed, an impact load that is extremely higher than a normal load (for example, a load that is approximately dozens of times higher than a normal load) may be applied to a driven gear provided on a balancer shaft from a driving gear provided on a crankshaft.
Then, the impact load is applied to roller bearings for the balancer shaft. Therefore, it is necessary to select roller bearings having a capacity large enough to withstand the impact load.

### SUMMARY OF THE INVENTION

It is an object of the invention to provide a balancer-shaft-supporting bearing unit that is structured so as to receive an impact load applied to a driven gear provided on a balancer shaft from a driving gear provided on a crankshaft, whereby protecting a roller bearing.

An aspect of the invention relates to a balancer-shaft-supporting bearing unit that is structured in such a manner that a balancer shaft, on which a driven gear that meshes with a driving gear provided on a crankshaft of an internal combustion engine is provided, is rotatably supported by a shaft-supporting portion of a housing via a roller bearing. In this balancer-shaft-supporting bearing unit, between the balancer shaft and the housing, a load-receiving portion that has a receiving face that receives the balancer shaft when the balancer shaft is elastically deflected by an impact load applied to the driven gear is formed at at least one of positions that are close to respective axial end portions of the driven gear.

With the structure described above, when an impact load is applied to the driven gear provided on the balancer shaft from the driving gear provided on the crankshaft, the balancer shaft is elastically deflected by the impact load. When the balancer shaft is elastically deflected, the balancer shaft is received by the receiving face of the load-receiving portion that is formed at at least one of the positions that are close to the respective axial end portions of the driven gear.
The impact load applied to the driven gear is received by the receiving face of the load-receiving portion, as described above. Therefore, it is possible to suppress application of the impact load to the roller bearing, and, consequently, it is possible to protect the roller bearing.

### BRIEF DESCRIPTION OF THE DRAWINGS

The foregoing and further features and advantages of the invention will be come apparent from the following description of example embodiments with reference to the accompanying drawings, wherein like numerals are used to represent like elements and wherein:
FIG. 1 is a vertical cross-sectional view showing a balancer-shaft-supporting bearing unit according to a first embodiment of the invention;
FIG 2 is an enlarged vertical cross-sectional view showing the relationship among a roller bearing for a balancer shaft, a driven gear and load-receiving portions according to the first embodiment;
FIG 3 is a front view showing the relationship between the balancer shaft and the load-receiving portion according to the first embodiment;
FIG. 4 is a vertical cross-sectional view showing the relationship between the driven gear provided on the balancer shaft and load-receiving portions in a balancer-shaft-supporting bearing unit according to a second embodiment of the invention; and
FIG. 5 is a front view showing the relationship between the balancer shaft and the load-receiving portion according to the second embodiment.

### DETAILED DESCRIPTION OF THE EMBODIMENTS

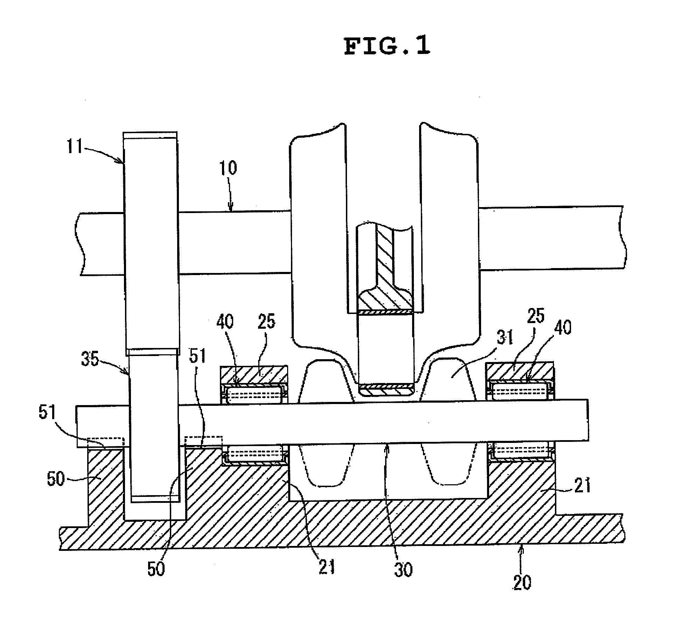

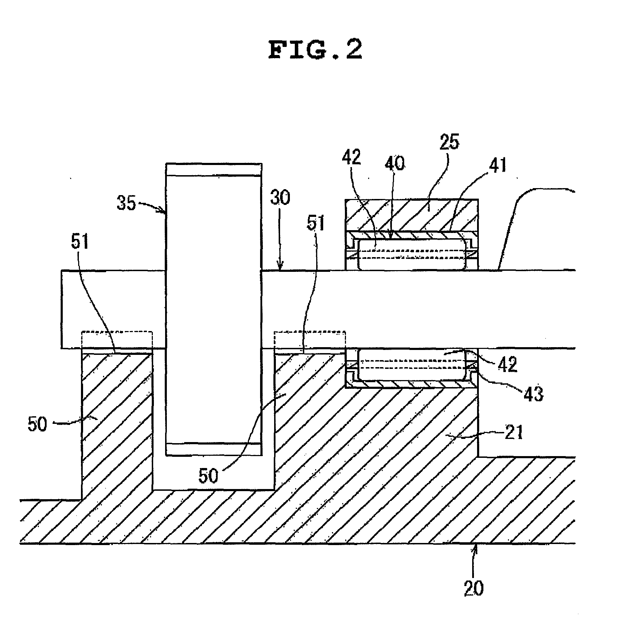

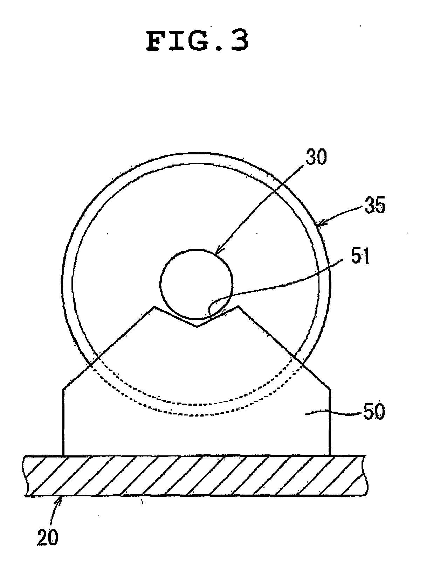

Hereafter, example embodiments of the invention will be described.
A first embodiment of the invention will be described with reference to FIGs. 1 to 3. FIG 1 is a vertical cross-sectional view showing a balancer-shaft-supporting bearing unit according to the first embodiment of the invention. FIG. 2 is an enlarged vertical cross-sectional view showing the relationship among a roller bearing for a balancer shaft, a driven gear and load-receiving portions. FIG. 3 is a front view showing the relationship between the balancer shaft and the load-receiving portion.

As shown in FIG. 1, in order to offset vibration generated by rotation of an internal combustion engine, a balancer shaft 30 is supported by shaft-supporting portions 21 of a housing 20 via roller bearings 40 that serve as rolling bearings in such a manner that the balancer shaft 30 is rotated in synchronization with a crankshaft 10.
A weight 31 is provided on the balancer shaft 30, and the roller bearings 40 are fitted to the balancer shaft 30 at positions on respective sides of the weight 31 in the axial direction. The weight 31 may be formed separately from the balancer shaft 30, or formed integrally with the balancer shaft 30.

As shown in FIG. 2, the roller bearing (e.g. a needle roller bearing) 40 includes an outer ring 41, a plurality of rollers 42, and retainers 43 that support the rollers 42. The roller bearing 40 is fitted to the balancer shaft 30 in such a manner that an outer peripheral face of the balancer shaft 30 is used as an inner ring raceway surface.
A driven gear 35 that meshes with a driving gear 11 provided on the crankshaft 10 is provided on the balancer shaft 30.

The shaft-supporting portions 21 are formed on the housing 20 at regular intervals in the axial direction. The shaft-supporting portions 21 project from the housing 20. A recessed portion having a semicircular arc-shaped cross section is formed in an upper face of each of the shaft-supporting portions 21. The roller bearings 40 are placed in the recessed portion of each of the shaft-supporting portions 21. In this state, a cover member (cap) 25 is fastened to the recessed portion of each of the shaft-supporting portions 21 with a bolt so as to cover the roller bearings 40. In this way, the balancer shaft 30 is fitted to the shaft-supporting portions 21.

As shown in FIGs. 2 and 3, between the balancer shaft 30 and the housing 20, a load-receiving portion 50 having a receiving face 51 is formed at at least one of positions that are close to respective axial end portions of the driven gear 35. The receiving face 51 receives the balancer shaft 30 when the balancer shaft 30 is deflected by an impact load that is applied to the driven gear 35.

In the first embodiment, the load-receiving portions 50 are formed integrally with an upper face of the housing 20 at portions that are close to the respective axial end portions of the driven gear 35. The receiving face 51 having, for example, a V-shaped or arc-shaped cross section is formed in an upper face of each of the load-receiving portions 50.
Preferably, the receiving faces 51 of the load-receiving portions 50 are face-hardened by, for example, a thermal process so that the receiving faces 51 are formed as abrasion-resistant sliding contact faces.
In addition, preferably, the receiving faces 51 of the load-receiving portions 50 are subjected to a surface lubrication process, for example, a solid lubrication coating process so that the receiving faces 51 are formed as lubricative sliding contact faces.
Further, preferably, the receiving faces 51 of the load-receiving portions 50 are located at a height at which the receiving faces 51 are close to the outer peripheral face of the balancer shaft 30 so that the receiving faces 51 directly receive the outer peripheral face of the balancer shaft 30.

The balancer-shaft-supporting bearing unit according to the first embodiment is structured as described above.
Therefore, when a vehicle is started suddenly, the vehicle is accelerated suddenly, or gears are changed, if an impact load that is extremely higher than a normal load, for example, a load that is approximately dozens of times higher than a normal load, is applied to the driven gear 35 provided on the balancer shaft 30 from the driving gear 11 provided on the crankshaft 10, the balancer shaft 30 is elastically deflected downward in FIG. 1 by the impact load.
When the balancer shaft 30 is elastically deflected, the balancer shaft 30 is received by the receiving faces 51 of the respective load-receiving portions 50 that are formed at the positions that are close to the respective axial end portions of the driven gear 35 provided on the balancer shaft 30.

As described above, the impact load that is applied to the driven gear 35 is appropriately received by the receiving faces 51 of the load-receiving portions 50. Therefore, it is possible to appropriately suppress application of the impact load to the roller bearings 40, and, consequently, it is possible to protect the roller bearings 40.
When the receiving faces 51 of the load-receiving portions 50 are face-hardened by, for example, the thermal process so that the receiving faces 51 are formed as the abrasion-resistant sliding contact faces, it is possible to suppress abrasion of the receiving faces 51 of the load-receiving portions 50, thereby improving the durability.
When the receiving faces 51 of the load-receiving portions 50 are subjected to the surface lubrication process, for example, the solid lubrication coating process so that the receiving faces 51 are formed as the lubricative sliding contact faces, it is possible to reduce torque loss due to friction between the receiving faces 51 of the load-receiving portions 50 and the balancer shaft 30.
When the receiving faces 51 of the load-receiving portions 50 are located at the height at which the receiving faces 51 are close to the outer peripheral face of the balancer shaft 30, the structure is simplified.

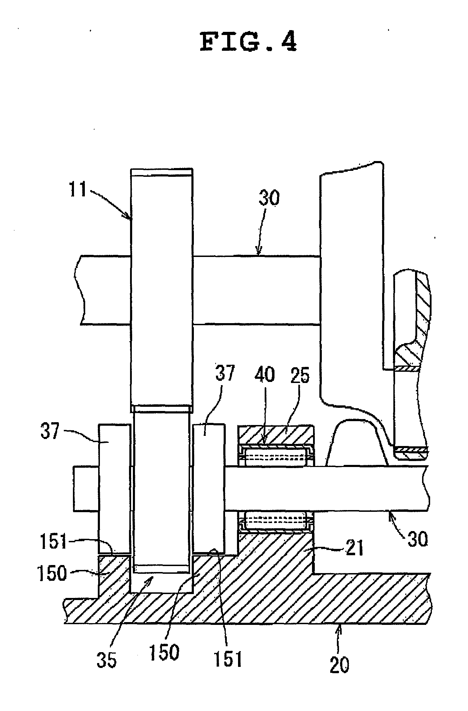

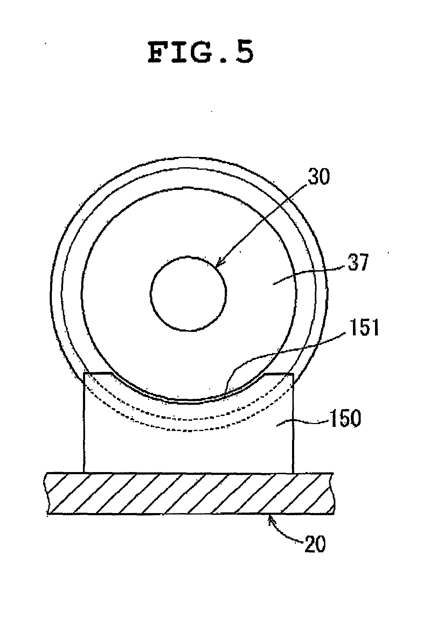

Next, a second embodiment of the invention will be described with reference to FIGs. 4 and 5.
FIG 4 is a vertical cross-sectional view showing the relationship between the driven gear provided on the balancer shaft and load-receiving portions in a baiancer-shaft-supporting bearing unit according to the second embodiment of the invention. FIG. 5 is a front view showing the relationship between the balancer shaft and the load-receiving portion.

As shown in FIGs. 4 and 5, in the second embodiment, flanges 37 that are larger in diameter than the balancer shaft 30 are provided on the balancer shaft 30 at positions that are close to the respective axial end portions of the driven gear 35, and load-receiving portions 150 having receiving faces 151 are formed on the upper face of the housing 20. The receiving faces 151 have for example, an arc-shaped or V-shaped cross section, and are located at a height at which the receiving faces 151 are close to outer peripheral faces of the respective flanges 37.
The other structures in the second embodiment are the same as those in the first embodiment. Therefore, the same portions as those in the first embodiment will be denoted by the same reference numerals as those in the first embodiment, and descriptions thereof will not be provided below.

Therefore, in the second embodiment, when an impact load is applied to the driven gear 35 provided on the balancer shaft 30 from the driving gear 11 provided on the crankshaft. 10, the balancer shaft 30 is elastically deflected downward in FIG 4 by the impact load. When the balancer shaft 30 is elastically deflected, the flanges 37 provided on the balancer shaft 30 are received by the receiving faces 151 of the respective load-receiving portions 150. Therefore, it is possible to appropriately suppress application of the impact load to the roller bearings 40, and, consequently, it is possible to protect the roller bearings 40.

The invention is not limited to the first and the second embodiments described above, and may be implemented in various other embodiments within the scope of the invention.
For example, preferably, an abrasion-resistant sliding contact face that is obtained by the face-hardening process, for example, the thermal process is formed in at least one of the receiving face 51 of the load-receiving portion 50 and a shaft portion of the balancer shaft 30, which faces the receiving face 51.
Also, preferably, a lubriacative sliding contact face that is obtained by the surface lubrication process, for example, the solid lubrication coating process is formed in at least one of the receiving face 51 of the load-receiving portion 50 and the shaft portion of the balancer shaft 30, which faces the receiving face 51.

A first aspect of the invention relates to a balancer-shaft-supporting bearing unit that is structured in such a manner that a balancer shaft, on which a driven gear that meshes with a driving gear provided on a crankshaft of an internal combustion engine is provided, is rotatably supported by a shaft-supporting portion of a housing via a roller bearing. In this balancer-shaft-supporting bearing unit, between the balancer shaft and the housing, a load-receiving portion that has a receiving face that receives the balancer shaft when the balancer shaft is elastically deflected by an impact load applied to the driven gear is formed at at least one of positions that are close to respective axial end portions of the driven gear.

With the structure described above, when an impact load is applied to the driven gear provided on the balancer shaft from the driving gear provided on the crankshaft, the balancer shaft is elastically deflected by the impact load. When the balancer shaft is elastically deflected, the balancer shaft is received by the receiving face of the load-receiving portion that is formed at at least one of the positions that are close to the respective axial end portions of the driven gear.
The impact load applied to the driven gear is received by the receiving face of the load-receiving portion, as described above. Therefore, it is possible to suppress application of the impact load to the roller bearing, and, consequently, it is possible to protect the roller bearing.

A second aspect of the invention relates to the balancer-shaft-supporting bearing unit according to the first aspect of the invention. In the balancer-shaft-supporting bearing unit according to the second aspect, an abrasion-resistant sliding contact face that is obtained by a face-hardening process, for example, a thermal process is formed in at least one of the receiving face of the load-receiving portion and a shaft portion of the balancer shaft, which faces the receiving face.

With the structure described above, the durability is improved by the abrasion-resistant sliding contact face that is formed in at least one of the receiving face of the load-receiving portion and the shaft portion of the balancer shaft which faces the receiving face.

A third aspect of the invention relates to the balancer-shaft-supporting bearing unit according to the first aspect of the invention. In the balancer-shaft-supporting bearing unit according to the third aspect, a lubricative sliding contact face that is obtained by a surface lubrication process, for example, a solid lubrication coating process is formed in at least one of the receiving face of the load-receiving portion and a shaft portion of the balancer shaft, which faces the receiving face.

With the structure described above, torque loss due to friction between the receiving face of the load-receiving portion and the balancer shaft is reduced by the lubricative sliding contact face that is formed in at least one of the receiving face of the load-receiving portion and a shaft portion of the balancer shaft, which faces the receiving face.

A fourth aspect of the invention relates to the balancer-shaft-supporting bearing unit according to any one of the first to third aspects of the invention. In the balancer-shaft-supporting bearing unit according to the fourth aspect, the receiving face of the load-receiving portion is located at a height at which the receiving face is close to an outer peripheral face of the balancer shaft.

With the structure described above, the outer peripheral face of the balancer shaft is directly received by the receiving face of the load-receiving portion. Therefore, the structure is simplified.
A balancer-shaft-supporting bearing unit is structured in such a manner that a balancer shaft (30), on which a driven gear (35) that meshes with a driving gear (11) provided on a crankshaft (10) of an internal combustion engine is provided, is rotatably supported by a shaft-supporting portion (21) of a housing (20) via a roller bearing(40). Between the balancer shaft (30) and the housing (20), a load-receiving portion (50) that has a receiving face (51) that receives the balancer shaft (30) when the balancer shaft (30) is elastically deflected by an impact load applied to the driven gear (35) is formed at at least one of positions that are close to respective axial end portions of the driven gear (35).

## Claims

1. A balancer-shaft-supporting bearing unit that is structured in such a manner that a balancer shaft, on which a driven gear that meshes with a driving gear provided on a crankshaft of an internal combustion engine is provided, is rotatably supported by a shaft-supporting portion of a housing via a roller bearing, wherein
between the balancer shaft and the housing, a load-receiving portion that has a receiving face that receives the balancer shaft when the balancer shaft is elastically deflected by an impact load applied to the driven gear is formed at at least one of positions that are close to respective axial end portions of the driven gear.

2. The balancer-shaft-supporting bearing unit according to claim 1, wherein an abrasion-resistant sliding contact face that is obtained by a face-hardening process performed by a thermal process is formed in at least one of the receiving face of the load-receiving portion and a shaft portion of the balancer shaft, which faces the receiving face.

3. The balancer-shaft-supporting bearing unit according to claim 1, wherein a lubricative sliding contact face obtained by a solid lubrication coating process that is a surface lubrication process is formed in at least one of the receiving face of the load-receiving portion and a shaft portion of the balancer shaft, which faces the receiving face.

4. The balancer-shaft-supporting bearing unit according to claim 1, wherein the receiving face of the load-receiving portion is located at a height at which the receiving face is close to an outer peripheral face of the balancer shaft.
